# EUROPÄISCHE PATENTANMELDUNG

(11) **EP 1 345 406 A1**
(43) Veröffentlichungstag der Anmeldung: **17.09.2003**
(21) Anmeldenummer: 02005560.4
(22) Anmeldetag: 12.03.2002
(51) Int. Cl.: H04N 1/195

(54) **Verfahren und Vorrichtung zum Aufbelichten von in einzelne Pixel aufgeteilten Bildinformationen auf lichtempfindliches Material**

(71) Anmelder: Agfa-Gevaert AG, 51373 Leverkusen (DE)
(72) Erfinder: Knut, Oberhardt, 83607 Föching (DE); Taresch, Gudrun, 80337 München (DE); Ehbrecht, Markus, 81543 München (DE); Münch, Reimund, 81543 München (DE)

(57) **Zusammenfassung**

Die Erfindung geht aus von einer Vorrichtung zum Aufbelichten von in einzelne Pixel aufgeteilten Bildinformationen auf lichtempfindliches Material (12), mit einer Einrichtung (1) zum Erzeugen von Teilbildern, einer optischen Abbildungseinrichtung (4) und einer Einrichtung (7) zum seitlichen Versetzen des Abbildes der Einrichtung zum Erzeugen von Teilbildern in der Ebene des lichtempfindlichen Materials. Erfindungsgemäß weist die Einrichtung (7) zum seitlichen Versetzen zwei im Strahlengang hintereinander angeordnete schwenkbare optische Elemente (8, 9) auf, deren Schwenkachsen (8a, 9a) rechtwinklig zueinander ausgerichtet sind.

## Beschreibung

Die Erfindung betrifft ein Verfahren und eine Vorrichtung zum Aufbelichten von in einzelne Pixel aufgeteilten Bildinformationen auf lichtempfindliches Material gemäß dem Oberbegriff von Anspruch 1 bzw. Anspruch 5.

Bei der Abbildung einer Bildinformation auf ein lichtempfindliches Material ist man bestrebt, die räumliche Auflösung des Bildes zu maximieren. Dies ist insbesondere dann von Bedeutung, wenn die bildgebende Vorrichtung elektronisch arbeitet. Bei den elektronischen bildgebenden Vorrichtungen wird die Bildinformation in Form einzelner Pixel durch Anzeige- oder Bildelemente zusammengesetzt, wobei die Anzeige- oder Bildelemente einzeln elektronisch ansteuerbar sind. Diese elektronischen, bildgebenden Vorrichtungen weisen bei vertretbaren Kosten jedoch eine Auflösung auf, die für Abbildungen hoch aufgelöster Bilder in fotografischer Qualität nicht ausreichend ist.

Will man daher beispielsweise die Darstellung auf einer LCD- (liquid crystal device), einer DMD- (digital mirror device) Anzeigevorrichtung oder einem sonstigen Lichtmodulator auf ein lichtempfindliches Material wie Fotopapier abbilden, wird bei den bekannten Verfahren die Auflösung mittels sequenzieller Abbildung erhöht. Um die Auflösung beispielsweise zu vervierfachen wird mit jedem Element der elektronischen, bildgebenden Vorrichtung nur ein Viertel des von diesem Elements zu erfassenden Bereichs der gesamten Bildinformation abgebildet, die anderen drei Viertel eines jeden LCD-Elements werden mit einer Maske abgedeckt. In einer zweiten Belichtung wird das Abbild des LCDs so verschoben, dass ein zweites Viertel der gesamten Bildinformation auf bisher noch nicht belichtete Bereiche abgebildet werden kann, usw. Nach vier Belichtungen jeweils eines Viertels der gesamten Bildinformation ergibt sich das Abbild des kompletten Bildes in vierfacher Auflösung.

Aus der EP 0 987 875 ist ein Verfahren zur Wiedergabe eines digitalen Bildes bekannt, wobei im wesentlichen eine LCD-Vorrichtung mittels eines Objektivs auf einen Bildträger abgebildet wird. Mit einer drehbaren Glasplatte wird ein seitlicher Versatz der abgebildeten Pixel in der Bildebene erzeugt und der Bildträger einmal oder mehrmals bei jeder Verschiebung belichtet.

Um die Glasscheibe für die jeweilige Belichtungsstellung positionieren zu können, muss immer ihre aktuelle Stellung bekannt sein. Hierzu ist jedoch eine Sensorik mit sehr hoher Auflösung und eine entsprechend aufwändige Signalverarbeitung notwendig. Trotz des Einsatzes solcher hochwertigen Bauteile bleibt die Positioniergenauigkeit und -geschwindigkeit aber problematisch.

Aufgabe der Erfindung ist es, ein Verfahren und eine Vorrichtung anzugeben, womit die Verschiebung der Abbildung der LCD-Elemente auf einer lichtempfindlichen Schicht reproduzierbar möglich ist und womit schnell und zuverlässig zwischen einzelnen Verschiebeschritten umgeschaltet werden kann.

Diese Aufgabe wird erfindungsgemäß gelöst durch eine Vorrichtung mit den kennzeichnenden Merkmalen von Anspruch 1 und ein Verfahren mit den kennzeichnenden Merkmalen von Anspruch 5. Bevorzugte Ausführungsformen der Erfindung sind Gegenstand der Unteransprüche.

Durch die Anordnung der zwei schwenkbaren optischen Elemente im Strahlengang hintereinander, deren Schwenkachsen rechtwinklig zueinander ausgerichtet sind, ist eine Verschiebung des Abbilds der LCD-Elemente auf der lichtempfindlichen Schicht in jede beliebige Richtung möglich. Mit einfachen Mitteln lässt sich die Bewegung der schwenkbaren optischen Elemente exakt begrenzen, so dass die Abbildung der Pixel auf einer lichtempfindlichen Schicht mit hoher Genauigkeit reproduzierbar ist, ohne dass die Stellung des optischen Elements für die Verschiebung erst erfasst werden muss.

Die Möglichkeit, die Abbildungen der LCD-Elemente in jede beliebige Richtung um eine beliebige Strecke zu verschieben, hat den Vorteil, dass in einem Kalibrier-Modus ein anderer Versatz der Pixel als während des eigentlichen Print-Vorganges realisierbar ist.

Im Kalibrier-Modus sollen defekte LCD-Elemente lokalisiert werden, um die Bilddaten vor dem Belichtungsvorgang mit entsprechende Korrekturalgorithmen beaufschlagen zu können. Hierzu ist es notwendig, die defekten LCD-Elemente möglichst auffällig und gut detektierbar darzustellen. Die seitliche Verschiebung der Abbildungen der LCD-Elemente wird daher so gesteuert, dass die einzelnen Abbilder jedes Pixels in der Bildebene jeweils direkt nebeneinander belichtet werden. Bei einer Vervierfachung der LCD-Auflösung entsteht auf diese Weise für jedes LCD-Element ein Makropixel mit vierfacher Größe. Ein defektes Pixel wird so gut sichtbar.

Fällt dagegen zwischen zwei Kalibriervorgängen ein LCD-Element aus, so soll das defekte Pixel in den Bildern möglichst wenig auffallen. Für die Belichtung von Bilddaten wird daher die Verschiebung der Abbildung der LCD-Elemente so gesteuert, dass die einzelnen Abbildungen jedes LCD-Elements weiter auseinander liegen. Auf diese Weise ergibt sich kein gut sichtbares Makropixel, sondern eine der Anzahl der Verschiebungen entsprechende Zahl kleiner, mit bestimmtem Abstand voneinander entfernter Pixel, die mit bloßem Auge kaum erkennbar sind.

Vorzugsweise weist die Vorrichtung wenigstens ein Paar von Anschlägen auf, die einen Winkel vorgeben, um den wenigstens eines der zwei optischen Elemente geschwenkt werden kann, so dass die beiden Glasplatten gegen diese Anschläge fahren und so sehr schnell und sehr positionsgenau geschaltet werden können.

Um eine verzerrungsfreie Abbildung zu erreichen, schneiden die Schwenkachsen der optischen Elemente die optische Achse des Strahlenganges im rechten Winkel.

Mit der erfindungsgemäßen Vorrichtung soll eine Auflösung des auf dem lichtempfindlichen Material erzeugten Bildes erreicht werden, die höher als die Auflösung der verwendeten LCD-Einrichtung ist. Die Vorrichtung ist daher so aufgebaut, dass mit jeder Belichtung nur ein Teil der Fläche des lichtempfindlichen Materials belichtet wird. Dies lässt sich beispielsweise dadurch erreichen, dass ein Teil eines jeden LCD-Elements durch eine Maske abgedeckt wird. Die bei der Belichtung eines ersten Teilbildes nicht belichteten Bereiche des lichtempfindlichen Materials werden mit den folgenden Belichtungen der restlichen Teilbilder belichtet. Auf diese Weise wird jedes LCD-Element mehrmals auf unterschiedlichen Bereichen des lichtempfindlichen Materials - jeweils mit unterschiedlicher Bildinformation - abgebildet. Es entsteht dabei in der Bildebene ein flächendekkendes Bild mit einem Vielfachen der Auflösung der LCD-Einrichtung.

Weitere Merkmale und Vorteile der Erfindung ergeben sich aus der folgenden Beschreibung eines bevorzugten Ausführungsbeispiels, bei der Bezug genommen wird auf die beigefügte Zeichnung.

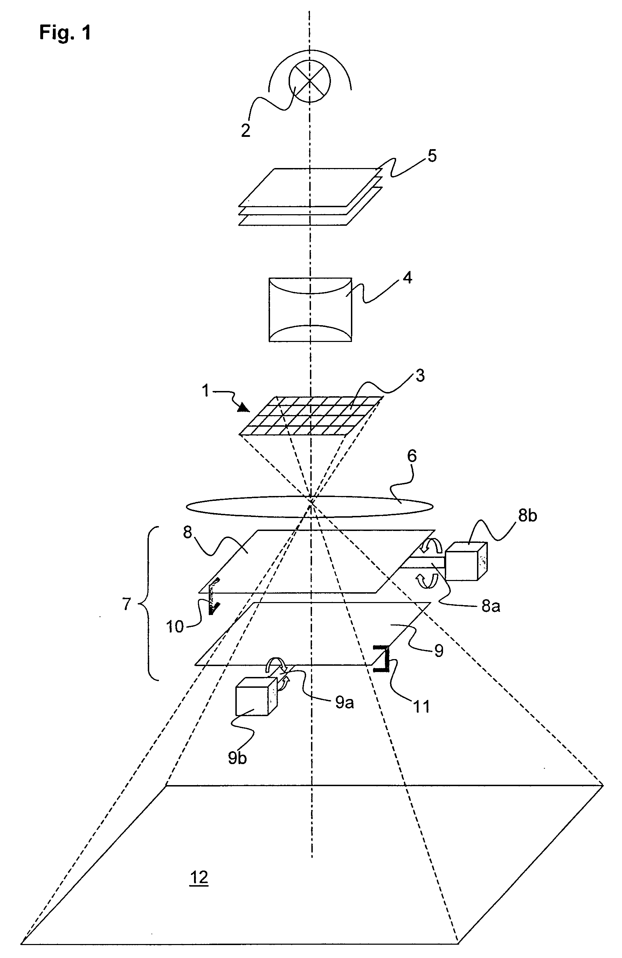

Fig. 1 zeigt den Strahlengang in einer Ausführungsform der erfindungsgemäßen Vorrichtung.

In Fig. 1 ist teilweise perspektivisch der Aufbau der Abbildungsoptik gezeigt, die zur Abbildung einer LCD-Darstellung auf eine lichtempfindliche Schicht verwendet wird. Zur Orientierung ist die optische Achse der Optik als strichpunktierte Linie in Fig. 1 gezeigt.

Mit einer LCD-Vorrichtung 1 wird ein Muster dargestellt, das mit einer Lichtquelle 2 belichtet wird. Das Muster auf der LCD-Vorrichtung 1 wird mit einzelnen LCD-Elementen 3 erzeugt, die einzeln ansteuerbar und in nicht dargestellter Weise mit einer Maske zum Teil abgedeckt sind. Um die Auflösung der Abbildung gegenüber der Auflösung der verwendeten LCD-Vorrichtung 1 zu vervierfachen, ist jedes LCD-Element 3 von der Maske zu einem Dreiviertel seiner Fläche abgedeckt.

Das Licht der Lampe 2 wird durch die einzeln einschwenkbaren Filter 5 angefärbt. Der Kondensor 4 richtet das Licht, so dass die LCD-Vorrichtung mit hartem Licht beaufschlagt werden kann.

Alternativ zu einer Lampe mit Farbfiltern kann das für die Abbildung notwendige farbige Licht auch mit LEDs erzeugt werden. Es spielt hierbei keine Rolle ob ein gemischtfarbiges LED-Array verwendet wird oder ob das Licht mehrerer verschiedenfarbiger LED-Arrays in dem Strahlengang vereinigt wird.

Durch eine Abbildungsoptik 6 wird das auf der LCD-Vorrichtung 1 erzeugte Muster auf das Fotopapier 12 abgebildet.

Zwischen der Abbildungsoptik 6 und der lichtempfindlichen Schicht des Fotopapiers 12 ist eine Einrichtung 7 zum seitlichen Versetzen des Abbildes der einzelnen LCD-Elemente 3 angeordnet.

Dieser so weit an sich bekannte Aufbau der Abbildungsoptik ist erfindungsgemäß bezüglich der Einrichtung 7 zum seitlichen Versetzen des Abbildes der einzelnen LCD-Elemente 3 in der Ebene des Fotopapiers 12 verändert. Erfindungsgemäß umfasst die Einrichtung 7 zwei schwenkbare planparallele Glasplatten 8 und 9. Die beiden Glasplatten 8 und 9 sind im Strahlengang hintereinander zwischen der Abbildungsoptik 6 und der Bildebene, in der sich die lichtempfindliche Schicht des Fotopapiers 12 befindet, angeordnet.

Die Glasplatten 8 bzw. 9 sorgen dafür, dass der Strahlengang je nach Stellung des optischen Elements definiert parallel versetzt wird. Das bedeutet, dass das Abbild eines jeden LCD-Elements 3 in der Ebene des Fotopapiers 12 in einem größeren Bereich um eine beliebige Strecke mit beliebigem Winkel verschoben werden kann. Dies lässt sich durch das Kippen der beiden planparallelen Glasplatten 8 und 9 erreichen. Während die Stellung der Glasplatte 8 für den Anteil der Verschiebung in y-Richtung verantwortlich ist, bewirkt das Kippen der Glasplatte 9 eine Verschiebung in x-Richtung. Durch die Kombination unterschiedlicher Kippwinkel der beiden Glasplatten lässt sich folglich jede beliebige Verschiebung realisieren.

Die schräggestellten, planparallelen Glasplatten 8 und 9 haben vorzugsweise eine Dicke von 1 bis 2mm. Ihre Mitte fällt mit der optischen Achse des Aufbaus zusammen. Da für die Umsetzung der Erfindung somit keine zusätzlichen optischen Elemente mit definiert gekrümmten Oberflächen notwendig sind, ist die Erfindung kostengünstig zu realisieren.

Die beiden Glasplatten 8 und 9 sind schwenkbar gelagert und werden durch Antriebseinrichtungen 8b und 9b um ihre jeweilige Schwenkachse gekippt. Die Schwenkachsen sind mit 8a bzw. 9a bezeichnet.

Da die Bildelemente einer LCD-Vorrichtung eine rechteckige Fläche haben, liegen die Schwenkachsen 8a und 9a parallel zu den Grundlinien der LCD-Elemente 3 und sind rechtwinklig zueinander ausgerichtet. Um eine Verzeichnung zu verhindern, sind die Schwenkachsen 8a und 9a in zueinander parallelen Ebenen angeordnet, die von der optischen Achse des Strahlengangs im rechten Winkel geschnitten werden. Beide Schwenkachsen schneiden diese optische Achse.

Bei einer bevorzugten Ausführungsform der Erfindung wird der Kippwinkel der optischen Elemente 8 und 9 durch ein Paar von Anschlägen 10 bzw. 11 vorgegeben. Die Anschläge 10 bzw. 11 bestehen im einfachsten Fall aus zwei horizontal verlaufenden, miteinander verbundenen Streben, die den Kippwinkel der Glasplatten nach oben oder unten begrenzen, so dass dadurch ein maximaler Winkel definiert wird, um den die zwei Glasplatten 8 und 9 geschwenkt werden können. Der so definierte Verstellwinkel liegt je nach Gegebenheiten etwa im Bereich zwischen 1° und 10°. Selbstverständlich ist auch ein Verstellmechanismus für die Glasplatten möglich, der hinreichend genau arbeitet und somit die Anschläge überflüssig macht.

Mit der obigen Vorrichtung lässt sich das erfindungsgemäße Verfahren zum Aufbelichten von in einzelne Pixel aufgeteilten Bildinformationen auf lichtempfindliches Material 12 durchführen.

Hierzu werden die zwei optische Elemente 8 bzw. 9 um ihre jeweilige Schwenkachse 8a bzw. 9a geschwenkt, wobei diese Schwenkachsen 8a und 9a rechtwinklig zueinander ausgerichtet sind. Dadurch wird der Strahlengang seitlich versetzt, und man kann das erzeugte Bild in der Bildebene 12 je nach Bedarf verschieben.

Ein wesentlicher Vorteil der Erfindung mit zwei voneinander unabhängig ansteuerbaren optischen Elementen 8 und 9 besteht darin, Pixel an beliebige Stellen zu belichten. Dadurch können einzelne LCD-Elemente 3 bei einer Kalibrierung der Vorrichtung an andere Stellen der lichtempfindlichen Schicht 12 gesetzt werden als bei Betrieb der Vorrichtung, d.h. bei der Belichtung von Bildern: Um defekte LCD-Elemente im Bild nicht sichtbar werden zu lassen, können die Bildpixel, die von ein und demselben LCD-Element erzeugt werden, eine gewisse Entfernung zueinander aufweisen und müssen nicht direkt nebeneinander liegen. Zum Kalibrieren ist die Anforderung aber genau gegensätzlich. Hier sollen die Bildpunkte, die von einem LCD-Element erzeugt werden, möglichst direkt nebeneinander liegen und einen "Makro-Bildpunkt" bilden. Auf diese Weise lassen sich Defekte der LCD-Vorrichtung 1 wesentlich leichter und genauer erkennen. Diese unterschiedlichen Anforderungen zwischen dem Belichten von Bildern und dem Kalibrieren des Printers lassen sich mit einer drehenden Glasplatte nicht erreichen, sondern werden erst mit den beiden schwenkbaren Glasplatten möglich.

Als weiterer Vorteil stellt sich die einfache Justierbarkeit dar. Werden die Glasplatten bei der Produktion so eingebaut, dass die Schwenkachsen nicht genau rechtwinklig zueinander stehen oder schief zu der LCD-Vorrichtung ausgerichtet sind, so lässt sich dieser Fehler durch einen Eingriff in die Ablaufsteuerung kompensieren. Eine Verschiebung des erzeugten Teilbildes nur in x-Richtung wird dann beispielsweise durch ein Verkippen von beiden Glasplatten und nicht nur von einer Glasplatte erreicht. Bei einer Vierfachverschiebung würden dann für die Belichtung aller vier Teilbilder beide Glasplatten bewegt werden.

## Patentansprüche

1. Vorrichtung zum Aufbelichten von in einzelne Pixel aufgeteilten Bildinformationen auf lichtempfindliches Material (12), mit einer Einrichtung (1) zum Erzeugen von Teilbildern, einer optischen Abbildungseinrichtung (4) und einer Einrichtung (7) zum seitlichen Versetzen des Abbildes der Einrichtung zum Erzeugen von Teilbildern in der Ebene des lichtempfindlichen Materials, **dadurch gekennzeichnet, dass** die Einrichtung (7) zumseitlichen Versetzen zwei im Strahlengang hintereinander angeordnete, optische Elemente (8, 9) aufweist, wobei jedes der optischen Elemente (8, 9) bewegbar ist.

2. Vorrichtung nach Anspruch 1, **dadurch gekennzeichnet, dass** die optischen Elemente (8, 9) über Schwenkachsen (8a, 9a) kippbar sind, die rechtwinklig zueinander ausgerichtet sind.

3. Vorrichtung nach Anspruch 1, **dadurch gekennzeichnet, dass** wenigstens ein Paar von Anschlägen (10, 11) vorgesehen ist, das einen Winkel vorgibt, um den wenigstens eines der zwei optischen Elemente (8, 9) geschwenkt werden kann.

4. Vorrichtung nach Anspruch 1, **dadurch gekennzeichnet, dass** die Schwenkachsen (8a, 9a) der optischen Elemente (8, 9) die optische Achse des Strahlengangs im rechten Winkel schneiden.

5. Verfahren zum Aufbelichten von in einzelne Pixel aufgeteilten Bildinformationen auf lichtempfindliches Material (12) mit den Schritten:
Erzeugen von Teilbildern durch eine Einrichtung (1) zum Erzeugen von Teilbildern und
seitliches Versetzen des Abbildes der Einrichtung zum Erzeugen von Teilbildern in der Ebene des lichtempfindlichen Materials,
**dadurch gekennzeichnet, dass** das seitliche Versetzen durch zwei im Strahlengang hintereinander angeordnete, optische Elemente (8, 9) erfolgt, wobei jeweils wenigstens eines der optischen Elemente (8, 9) bewegt wird.

6. Verfahren nach Anspruch 5, **dadurch gekennzeichnet, dass** die optischen Elemente (8, 9) über rechtwinklig zueinander ausgerichtete Schwenkachsen gekippt werden.

7. Verfahren nach Anspruch 5, **dadurch gekennzeichnet, dass** wenigstens eines der zwei optischen Elemente (8, 9) um einen Winkel geschwenkt wird, der durch ein Anschläge (10, 11) gegeben ist.

8. Verfahren nach Anspruch 5, **dadurch gekennzeichnet, dass** zur Erzeugung eines jeden Teilbildes beide optische Elemente (8, 9) einen Winkel ungleich 90° zur optischen Achse des Strahlengangs einnehmen.

9. Verfahren nach Anspruch 5, **dadurch gekennzeichnet, dass** in jeder vorbestimmten Stellung der optischen Elemente (8, 9) drei Teilbilder in unterschiedlichen Farben auf das lichtempfindliche Material (12) aufbelichtet werden.

10. Verfahren nach Anspruch 5, **dadurch gekennzeichnet, dass** die in einzelne Pixel aufgeteilten Bildinformationen in eine Vielzahl von Teilbildern aufgeteilt und diese Teilbilder sequentiell auf das lichtempfindliche Material (12) aufbelichtet werden.
